# EUROPEAN PATENT APPLICATION

(11) **EP 3 136 210 A1**
(43) Date of publication of application: **01.03.2017**
(21) Application number: 16186365.9
(22) Date of filing: 30.08.2016
(51) Int. Cl.: G06F 3/044, G06F 3/041

(54) **PRESSURE DETECTOR CAPABLE OF ADJUSTING PRESSURE SENSITIVITY AND TOUCH INPUT DEVICE INCLUDING THE SAME**

(30) Priority: 31.08.2015 KR 20150122531
(71) Applicant: HiDeep Inc., Gyeonggi-do 463-400 (KR)
(72) Inventor: Kim, Seyeob, 463-400 Gyeonggi-do (KR)
(74) Representative: Patronus IP Patent- und Rechtsanwälte

(57) **Abstract**

A touch input device may be provided that includes: a pressure sensor; and a pressure detector. The pressure detector includes: a drive unit which applies a drive signal to the pressure sensor; a sensing unit which receives a signal from the pressure sensor and detects a change amount of a capacitance generated at the pressure sensor; and a controller which is configured to change and set the capacitance change amount corresponding to a predetermined pressure magnitude.

## Description

### BACKGROUND

### Field

The present disclosure relates to a pressure detector and a touch input device including the same, and more particularly to a pressure detector which is applied to a touch input device and is capable of adjusting the sensitivity of a touch pressure, and the touch input device including the same.

### Description of the Related Art

Various kinds of input devices are being used to operate a computing system. For example, the input device includes a button, key, joystick and touch screen. Since the touch screen is easy and simple to operate, the touch screen is increasingly being used in operation of the computing system.

The touch screen may constitute a touch surface of a touch input device including a touch sensor panel which may be a transparent panel including a touch-sensitive surface. The touch sensor panel is attached to the front side of a display screen, and then the touch-sensitive surface may cover the visible side of the display screen. The touch screen allows a user to operate the computing system by simply touching the touch screen by a finger, etc. Generally, the computing system recognizes the touch and a position of the touch on the touch screen and analyzes the touch, and thus, performs the operations in accordance with the analysis.

A demand for a touch input device capable of detecting not only the touch position but also the magnitude of a touch pressure is increasing. In addition to this, efforts are now being constantly made to improve the convenience for users at the time of using the magnitude of the pressure as an input.

### SUMMARY

One embodiment is a touch input device that includes: a pressure sensor; and a pressure detector. The pressure detector may include: a drive unit which applies a drive signal to the pressure sensor; a sensing unit which receives a signal from the pressure sensor and detects a change amount of a capacitance generated at the pressure sensor; and a controller which is configured to change and set the capacitance change amount corresponding to a predetermined pressure magnitude.

Another embodiment is a pressure detector that may include: a drive unit which applies a drive signal to a pressure sensor; a sensing unit which receives a signal from the pressure sensor and detects a change amount of a capacitance generated at the pressure sensor; and a controller which is configured to change and set the capacitance change amount corresponding to a predetermined pressure magnitude.

### BRIEF DESCRIPTION OF THE DRAWINGS

Fig. 1 is a schematic view of a configuration of a capacitance type touch sensor panel and the operation thereof in accordance with an embodiment of the present invention;
Figs. 2a to 2e are conceptual views showing a relative position of the touch sensor panel with respect to a display panel in a touch input device according to the embodiment;
Fig. 3a is a cross sectional view showing a first example of the touch input device configured to detect a touch position and a touch pressure in accordance with the embodiment;
Fig. 3b is a cross sectional view showing a second example of the touch input device configured to detect a touch position and a touch pressure in accordance with the embodiment;
Fig. 3c shows an optical layer of a backlight unit in the touch input device according to the embodiment;
Fig. 3d is a cross sectional view showing a third example of the touch input device configured to detect a touch position and a touch pressure in accordance with the embodiment;
Figs. 4a and 4b show a relative distance between a reference potential layer and a pressure sensor of a first example which are included in the touch input device, and show a pressure is applied to the touch input device;
Figs. 4c and 4d show a relative distance between a reference potential layer and a pressure sensor of a second example which are included in the touch input device, and show that a pressure is applied to the touch input device;
Fig. 4e shows the arrangement of pressure sensors of a third example which is included in the touch input device;
Figs. 5a to 5e show patterns according to first to fifth examples of an electrode constituting the pressure sensor according to the embodiment;
Fig. 6a is a cross sectional view of an exemplary electrode sheet which includes a pressure electrode and is to be attached to the touch input device according to the embodiment;
Fig. 6b is a cross sectional view showing a portion of the touch input device to which the electrode sheet has been attached according to a first method;
Fig. 6c is a plan view of the electrode sheet to be attached to the touch input device in accordance with the first method;
Fig. 6d is a cross sectional view showing a portion of the touch input device to which the electrode sheet has been attached according to a second method;
Fig. 7 shows a change of pressure sensitivity in the touch input device according to the embodiment;
Fig. 8 shows an example where a touch screen is divided such that the pressure sensitivity is separately set in the touch input device according to the embodiment;
Fig. 9 shows that different pressure sensitivities are set for each divided area of the touch screen in the touch input device according to the embodiment;
Fig. 10a shows a pressure detector according to the embodiment;
Fig. 10b shows a sensing unit of the pressure detector according to the embodiment; and
Fig. 11 is a view for describing factor setting in a boundary area of a divided screen in the touch input device according to the embodiment.

### DETAILED DESCRIPTION

The following detailed description of the present invention shows a specified embodiment of the present invention and will be provided with reference to the accompanying drawings. The embodiment will be described in enough detail that those skilled in the art are able to embody the present invention. It should be understood that various embodiments of the present invention are different from each other and need not be mutually exclusive. For example, a specific shape, structure and properties, which are described in this disclosure, may be implemented in other embodiments without departing from the spirit and scope of the present invention with respect to one embodiment. Also, it should be noted that positions or placements of individual components within each disclosed embodiment may be changed without departing from the spirit and scope of the present invention. Similar reference numerals in the drawings designate the same or similar functions in many aspects.

Hereinafter, a pressure sensor and a touch input device to which a pressure detection module including the pressure sensor can be applied will be described in accordance with an embodiment of the present invention. Hereinafter, a capacitance type touch sensor panel 100 and a pressure sensor 450 and 460 will be described. In addition, it is possible to apply a method for detecting a touch position and/or a touch pressure in another manner in accordance with the embodiment.

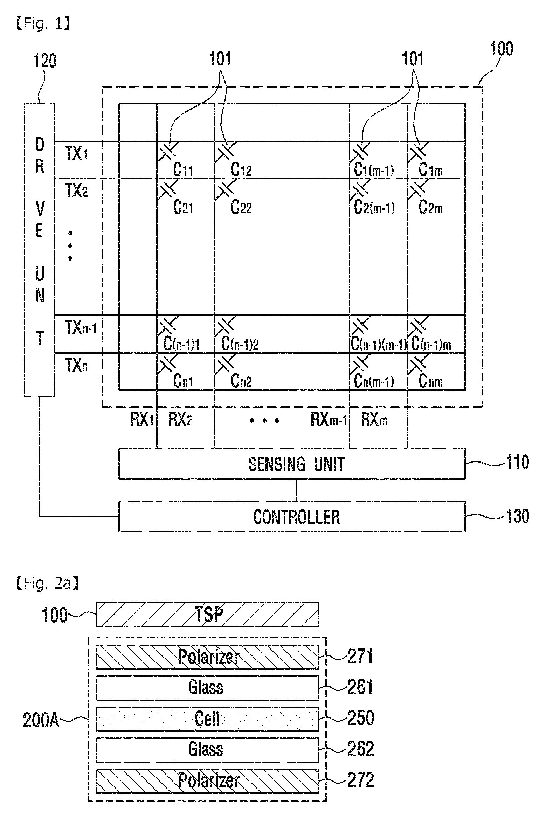

Fig. 1 is a schematic view of a configuration of the capacitance type touch sensor panel 100 and the operation thereof in accordance with the embodiment. Referring to Fig. 1, a touch sensor panel 100 according to the embodiment may include a plurality of drive electrodes TX1 to TXn and a plurality of receiving electrodes RX1 to RXm. The touch sensor panel 100 may include a drive unit 120 which applies a drive signal to the plurality of drive electrodes TX1 to TXn for the purpose of the operation of the touch sensor panel 100, and a sensing unit 110 which detects whether the touch has occurred or not and/or the touch position by receiving a sensing signal including information on the capacitance change amount changing according to the touch on the touch surface of the touch sensor panel 100.

As shown in Fig. 1, the touch sensor panel 100 may include the plurality of drive electrodes TX1 to TXn and the plurality of receiving electrodes RX1 to RXm. While Fig. 1 shows that the plurality of drive electrodes TX1 to TXn and the plurality of receiving electrodes RX1 to RXm of the touch sensor panel 100 form an orthogonal array, the present invention is not limited to this.

The plurality of drive electrodes TX1 to TXn and the plurality of receiving electrodes RX1 to RXm has an array of arbitrary dimension, for example, a diagonal array, a concentric array, a 3-dimensional random array, etc., and an array obtained by the application of them. Here, "n" and "m" are positive integers and may be the same as each other or may have different values. The magnitude of the value may be changed depending on the embodiment.

As shown in Fig. 1, the plurality of drive electrodes TX1 to TXn and the plurality of receiving electrodes RX1 to RXm may be arranged to cross each other. The drive electrode TX may include the plurality of drive electrodes TX1 to TXn extending in a first axial direction. The receiving electrode RX may include the plurality of receiving electrodes RX1 to RXm extending in a second axial direction crossing the first axial direction.

In the touch sensor panel 100 according to the embodiment, the plurality of drive electrodes TX1 to TXn and the plurality of receiving electrodes RX1 to RXm may be formed in the same layer. For example, the plurality of drive electrodes TX1 to TXn and the plurality of receiving electrodes RX1 to RXm may be formed on the same side of an insulation layer (not shown). Also, the plurality of drive electrodes TX1 to TXn and the plurality of receiving electrodes RX1 to RXm may be formed in different layers. For example, the plurality of drive electrodes TX1 to TXn and the plurality of receiving electrodes RX1 to RXm may be formed on both sides of one insulation layer (not shown) respectively, or the plurality of drive electrodes TX1 to TXn may be formed on a side of a first insulation layer (not shown) and the plurality of receiving electrodes RX1 to RXm may be formed on a side of a second insulation layer (not shown) different from the first insulation layer.

The plurality of drive electrodes TX1 to TXn and the plurality of receiving electrodes RX1 to RXm may be made of a transparent conductive material (for example, indium tin oxide (ITO) or antimony tin oxide (ATO) which is made of tin oxide (SnO₂), and indium oxide (In₂O₃), etc.), or the like. However, this is only an example. The drive electrode TX and the receiving electrode RX may be also made of another transparent conductive material or an opaque conductive material. For instance, the drive electrode TX and the receiving electrode RX may include at least any one of silver ink, copper, and carbon nanotube (CNT). Also, the drive electrode TX and the receiving electrode RX may be made of metal mesh or nano silver.

The drive unit 120 according to the embodiment may apply a drive signal to the drive electrodes TX1 to TXn. In the embodiment, one drive signal may be sequentially applied at a time to the first drive electrode TX1 to the n-th drive electrode TXn. The drive signal may be applied again repeatedly. This is only an example. The drive signal may be applied to the plurality of drive electrodes at the same time in accordance with the embodiment.

Through the receiving electrodes RX1 to RXm, the sensing unit 110 receives the sensing signal including information on a capacitance (Cm) 101 generated between the receiving electrodes RX1 to RXm and the drive electrodes TX1 to TXn to which the drive signal has been applied, thereby detecting whether or not the touch has occurred and the touch position. For example, the sensing signal may be a signal coupled by the capacitance (Cm) 101 generated between the receiving electrode RX and the drive electrode TX to which the drive signal has been applied. As such, the process of sensing the drive signal applied from the first drive electrode TX1 to the n-th drive electrode TXn through the receiving electrodes RX1 to RXm can be referred to as a process of scanning the touch sensor panel 100.

For example, the sensing unit 110 may include a receiver (not shown) which is connected to each of the receiving electrodes RX1 to RXm through a switch. The switch becomes the on-state in a time interval during which the signal of the corresponding receiving electrode RX is sensed, thereby allowing the receiver to sense the sensing signal from the receiving electrode RX. The receiver may include an amplifier (not shown) and a feedback capacitor coupled between the negative (-) input terminal of the amplifier and the output terminal of the amplifier, i.e., coupled to a feedback path. Here, the positive (+) input terminal of the amplifier may be connected to the ground or to a reference voltage. Also, the receiver may further include a reset switch which is connected in parallel with the feedback capacitor. The reset switch may reset the conversion from current to voltage that is performed by the receiver. The negative input terminal of the amplifier is connected to the corresponding receiving electrode RX and receives and integrates a current signal including information on the capacitance (CM) 101, and then converts the integrated current signal into voltage. The sensing unit 110 may further include an analog-digital converter (ADC) (not shown) which converts the integrated data by the receiver into digital data. Later, the digital data may be input to a processor (not shown) and processed to obtain information on the touch on the touch sensor panel 100. The sensing unit 110 may include the ADC and processor as well as the receiver.

A controller 130 may perform a function of controlling the operations of the drive unit 120 and the sensing unit 110. For example, the controller 130 generates and transmits a drive control signal to the drive unit 120, so that the drive signal can be applied to a predetermined drive electrode TX1 at a predetermined time. Also, the controller 130 generates and transmits the drive control signal to the sensing unit 110, so that the sensing unit 110 may receive the sensing signal from the predetermined receiving electrode RX at a predetermined time and perform a predetermined function.

In Fig. 1, the drive unit 120 and the sensing unit 110 may constitute a touch detection device (not shown) capable of detecting whether or not the touch has occurred on the touch sensor panel 100 according to the embodiment and/or the touch position. The touch detection device according to the embodiment may further include the controller 130. The touch detection device according to the embodiment may be integrated and implemented on a touch sensing integrated circuit (IC) (not shown) in a touch input device 1000 including the touch sensor panel 100. The drive electrode TX and the receiving electrode RX included in the touch sensor panel 100 may be connected to the drive unit 120 and the sensing unit 110 included in the touch sensing IC through, for example, a conductive trace and/or a conductive pattern printed on a circuit board, or the like. The touch sensing IC may be placed on a circuit board on which the conductive pattern has been printed. According to the embodiment, the touch sensing IC may be mounted on a main board for operation of the touch input device 1000.

As described above, a capacitance (C) with a predetermined value is generated at each crossing of the drive electrode TX and the receiving electrode RX. When an object such as finger approaches close to the touch sensor panel 100, the value of the capacitance may be changed. In Fig. 1, the capacitance may represent a mutual capacitance (Cm). The sensing unit 110 senses such electrical characteristics, thereby being able to sense whether the touch has occurred on the touch sensor panel 100 or not and the touch position. For example, the sensing unit 110 is able to sense whether the touch has occurred on the surface of the touch sensor panel 100 comprised of a two-dimensional plane consisting of a first axis and a second axis and/or the touch position.

More specifically, when the touch occurs on the touch sensor panel 100, the drive electrode TX to which the drive signal has been applied is detected, so that the position of the second axial direction of the touch can be detected. Likewise, when the touch occurs on the touch sensor panel 100, a capacitance change is detected from the reception signal received through the receiving electrode RX, so that the position of the first axial direction of the touch can be detected.

The mutual capacitance type touch sensor panel as the touch sensor panel 100 has been described in detail in the foregoing. However, in the touch input device 1000 according to the embodiment, the touch sensor panel 100 for detecting whether or not the touch has occurred and the touch position may be implemented by using not only the above-described method but also any touch sensing method like a self-capacitance type method, a surface capacitance type method, a projected capacitance type method, a resistance film method, a surface acoustic wave (SAW) method, an infrared method, an optical imaging method, a dispersive signal technology, and an acoustic pulse recognition method, etc.

Hereinafter, a configuration corresponding to the drive electrode TX and the receiving electrode RX for detecting whether or not the touch has occurred and/or the touch position may be referred to as a touch sensor.

In the touch input device 1000 according to the embodiment of the present invention, the touch sensor panel 100 for detecting the touch position may be positioned outside or inside a display panel 200A. The display panel 200A of the touch input device 1000 according to the embodiment may be a display panel included in a liquid crystal display (LCD), a plasma display panel (PDP), an organic light emitting diode (OLED), etc. Accordingly, a user may perform the input operation by touching the touch surface while visually identifying an image displayed on the display panel. Here, the display panel 200A may include a control circuit which receives an input from an application processor (AP) or a central processing unit (CPU) on a main board for the operation of the touch input device 1000 and displays the contents that the user wants on the display panel. Here, the control circuit for the operation of the display panel 200A may include a display panel control IC, a graphic controller IC, and other circuits required to operate the display panel 200A.

Figs. 2a to 2e are conceptual views showing a relative position of the touch sensor panel 100 with respect to the display panel 200A in the touch input device according to the embodiment. First, referring to Figs. 2a to 2c, a relative position of the touch sensor panel 100 with respect to the display panel 200A using an LCD panel will be described.

As shown in Figs. 2a to 2c, the LCD panel may include a liquid crystal layer 250 including a liquid crystal cell, a first glass layer 261 and a second glass layer 262 which are disposed on both sides of the liquid crystal layer 250 and include electrodes, a first polarizer layer 271 formed on a side of the first glass layer 261 in a direction facing the liquid crystal layer 250, and a second polarizer layer 272 formed on a side of the second glass layer 262 in the direction facing the liquid crystal layer 250. Here, the first glass layer 261 may be a color filter glass, and the second glass layer 262 may be a TFT glass.

It is clear to those skilled in the art that the LCD panel may further include other configurations for the purpose of performing the displaying function and may be transformed.

Fig. 2a shows that the touch sensor panel 100 of the touch input device 1000 is disposed outside the display panel 200A. The touch surface of the touch input device 1000 may be the surface of the touch sensor panel 100. In Fig. 2a, the top surface of the touch sensor panel 100 is able to function as the touch surface. Also, according to the embodiment, the touch surface of the touch input device 1000 may be the outer surface of the display panel 200A. In Fig. 2a, the bottom surface of the second polarizer layer 272 of the display panel 200A is able to function as the touch surface. Here, in order to protect the display panel 200A, the bottom surface of the display panel 200A may be covered with a cover layer (not shown) such as glass.

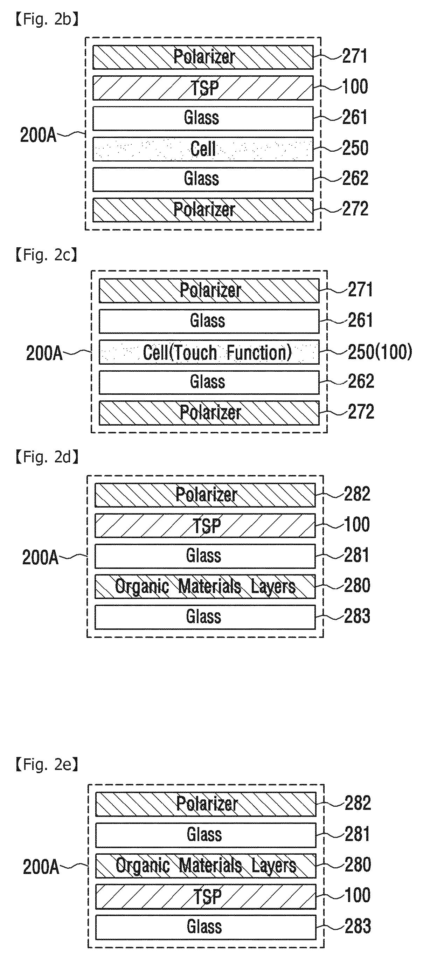

Figs. 2b and 2c show that the touch sensor panel 100 of the touch input device 1000 is disposed within the display panel 200A. Here, in Fig. 2b, the touch sensor panel 100 for detecting the touch position is disposed between the first glass layer 261 and the first polarizer layer 271.

Here, the touch surface of the touch input device 1000 is the outer surface of the display panel 200A. The top surface or bottom surface of the display panel 200A in Fig. 2b may be the touch surface. Fig. 2c shows that the touch sensor panel 100 for detecting the touch position is included in the liquid crystal layer 250. Here, the touch surface of the touch input device 1000 is the outer surface of the display panel 200A. The top surface or bottom surface of the display panel 200A in Fig. 2c may be the touch surface. In Figs. 2b and 2c, the top surface or bottom surface of the display panel 200A, which can be the touch surface, may be covered with a cover layer (not shown) such as glass.

Next, a relative position of the touch sensor panel 100 with respect to the display panel 200A using an OLED panel will be described with reference to Figs. 2d and 2e. In Fig. 2d, the touch sensor panel 100 is located between a polarizer layer 282 and a first glass layer 281. In Fig. 2e, the touch sensor panel 100 is located between an organic layer 280 and a second glass layer 283.

Here, the first glass layer 281 may be comprised of an encapsulation glass, and the second glass layer 283 may be comprised of a TFT glass. Since the touch sensing has been described above, only the other configurations thereof will be briefly described.

The OLED panel is a self-light emitting display panel which uses a principle in which current flows through a fluorescent or phosphorescent organic thin film and then electrons and electron holes are combined in the organic layer, so that light is generated. The organic matter constituting the light emitting layer determines the color of the light.

Specifically, the OLED uses a principle in which when electricity flows and an organic matter is applied on glass or plastic, the organic matter emits light. That is, the principle is that electron holes and electrons are injected into the anode and cathode of the organic matter respectively and are recombined in the light emitting layer, so that a high energy exciton is generated and the exciton releases the energy while falling down to a low energy state and then light with a particular wavelength is generated. Here, the color of the light is changed according to the organic matter of the light emitting layer.

The OLED includes a line-driven passive-matrix organic light-emitting diode (PM-OLED) and an individual driven active-matrix organic light-emitting diode (AM-OLED) in accordance with the operating characteristics of a pixel constituting a pixel matrix. None of them require a backlight.

Therefore, the OLED enables a very thin display module to be implemented, has a constant contrast ratio according to an angle and obtains a good color reproductivity depending on a temperature. Also, it is very economical in that non-driven pixel does not consume power.

In terms of operation, the PM-OLED emits light only during a scanning time at a high current, and the AM-OLED maintains a light emitting state only during a frame time at a low current.

Therefore, the AM-OLED has a resolution higher than that of the PM-OLED and is advantageous for driving a large area display panel and consumes low power. Also, a thin film transistor (TFT) is embedded in the AM-OLED, and thus, each component can be individually controlled, so that it is easy to implement a delicate screen.

As shown in Figs. 2d and 2e, basically, the OLED (particularly, AM-OLED) panel includes the polarizer layer 282, the first glass layer 281, the organic layer 280, and the second glass layer 283. Here, the first glass layer 281 may be a cover glass and the second glass layer 283 may be a TFT glass. However, they are not limited to this.

Also, the organic layer 280 may include a hole injection layer (HIL), a hole transport layer (HTL), an electron injection layer (EIL), an electron transport layer (ETL), and an light-emitting layer (EML).

Briefly describing each of the layers, HIL injects electron holes and uses a material such as CuPc, etc. HTL functions to move the injected electron holes and mainly uses a material having a good hole mobility. Arylamine, TPD, and the like may be used as the HTL. The EIL and ETL inject and transport electrons. The injected electrons and electron holes are combined in the EML and emit light. The EML represents the color of the emitted light and is composed of a host determining the lifespan of the organic matter and an impurity (dopant) determining the color sense and efficiency. This just describes the basic structure of the organic layer 280 include in the OLED panel. The present invention is not limited to the layer structure or material, etc., of the organic layer 280.

The organic layer 280 is inserted between the anode (not shown) and a cathode (not shown). When the TFT becomes an on-state, a driving current is applied to the anode and the electron holes are injected, and the electrons are injected to the cathode. Then, the electron holes and electrons move to the organic layer 280 and emit the light.

Also, according to the embodiment, at least a portion of the touch sensor may be configured to be positioned within the display panel 200A, and at least a portion of the remaining touch sensor may be configured to be positioned outside the display panel 200A. For example, any one of the drive electrode TX and the receiving electrode RX which constitute the touch sensor panel 100 may be configured to be positioned outside the display panel 200A, the remaining electrode may be configured to be positioned within the display panel 200A. When the touch sensor is disposed within the display panel 200A, an electrode for operating the touch sensor may be further disposed. However, various configurations and/or the electrode which are located within the display panel 200A may be used as the touch sensor for touch sensing.

The second glass layer 262 may be comprised of various layers including a data line a gate line, TFT, a common electrode, and a pixel electrode, etc. These electrical components may operate in such a manner as to generate a controlled electric field and orient liquid crystals located in the liquid crystal layer 250. Any one of the data line, gate line, common electrode, and pixel electrode included in the second glass layer 262 may be configured to be used as the touch sensor.

Up to now, the touch position detection by the touch sensor panel 100 according to the embodiment of the present invention has been described. Additionally, through use of the touch sensor panel 100 according to the embodiment of the present invention, it is possible to detect the magnitude of the touch pressure as well as whether the touch has occurred or not and/or where the touch has occurred. Also, the touch input device to which the pressure detection module according to the embodiment of the present invention is applied may not include the touch sensor panel 100. Also, a pressure sensor for detecting the touch pressure is included separately from the touch sensor panel 100, so that it is possible to detect the magnitude of the touch pressure. Hereafter, the pressure sensor and the touch input device including the same will be described in detail.

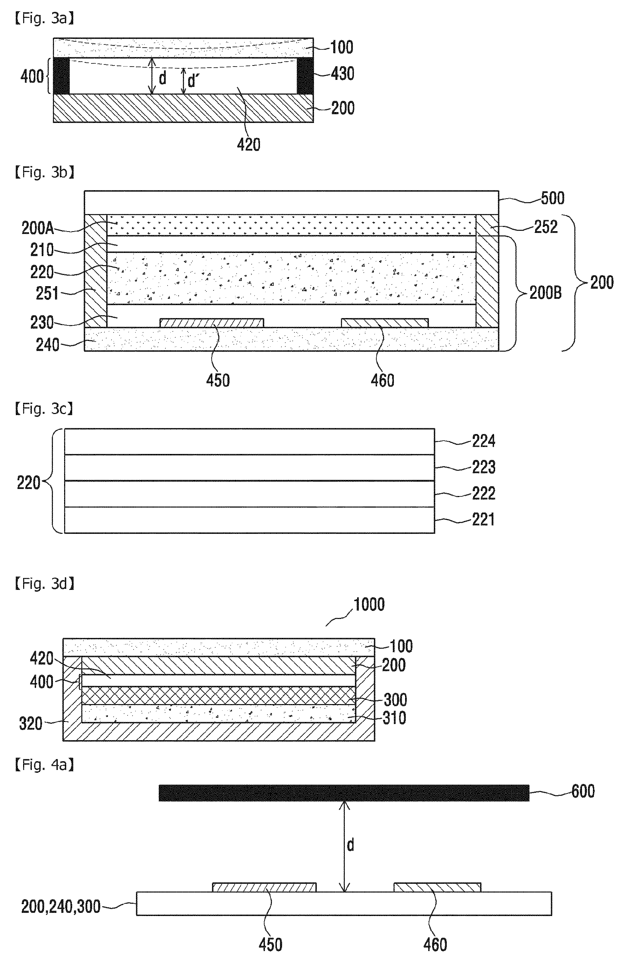

Fig. 3a is a cross sectional view showing a first example of the touch input device configured to detect a touch position and a touch pressure in accordance with the embodiment. In the touch input device 1000 including a display module 200, a pressure detection module 400 and the touch sensor panel 100 which detects the touch position may be attached to the front side of the display panel 200. Accordingly, it is possible to protect a display screen of the display panel 200 and to increase a touch detection sensitivity of the touch sensor panel 100.

Here, the pressure detection module 400 may operate separately from the touch sensor panel 100 which detects the touch position. For example, the pressure detection module 400 may detect only the pressure independently of the touch sensor panel 100 which detects the touch position. Also, the pressure detection module 400 may be configured to be coupled to the touch sensor panel 100 which detects the touch position and to detect the touch pressure. For example, at least one of the drive electrode TX and the receiving electrode RX included in the touch sensor panel 100 which detects the touch position may be used to detect the touch pressure.

Fig. 3a shows that the pressure detection module 400 is coupled to the touch sensor panel 100 and detects the touch pressure. In Fig. 3a, the pressure detection module 400 includes a spacer layer 420 which leaves a space between the touch sensor panel 100 and the display module 200. The pressure detection module 400 may include a reference potential layer spaced from the touch sensor panel 100 by the spacer layer 420. Here, the display module 200 may function as the reference potential layer.

The reference potential layer may have any potential which causes the change of the capacitance 101 generated between the drive electrode TX and the receiving electrode RX. For instance, the reference potential layer may be a ground layer having a ground potential. The reference potential layer may be the ground layer of the display module 200. Here, the reference potential layer may have a parallel plane with the two-dimensional plane of the touch sensor panel 100.

As shown in Fig. 3a, the touch sensor panel 100 is disposed apart from the display module 200, i.e., the reference potential layer. Here, depending on a method for adhering the touch sensor panel 100 to the display module 200, the spacer layer 420 may be implemented in the form of an air gap between the touch sensor panel 100 and the display module 200. The spacer layer 420 may be made of an impact absorbing material in accordance with the embodiment. Here, the impact absorbing material may include sponge and a graphite layer. The spacer layer 420 may be filled with a dielectric material in accordance with the embodiment. The spacer layer 420 may be formed through a combination of the air gap, the impact absorbing material, and the dielectric material.

Here, a double adhesive tape (DAT) 430 may be used to fix the touch sensor panel 100 and the display module 200. For example, the areas the touch sensor panel 100 and the display module 200 are overlapped with each other. The touch sensor panel 100 and the display module 200 are adhered to each other by adhering the edge portions of the touch sensor panel 100 and the display module 200 through use of the DAT 430. The rest portions of the touch sensor panel 100 and the display module 200 may be spaced apart from each other by a predetermined distance " d ".

In general, even when the touch surface is touched without bending the touch sensor panel 100, the capacitance (Cm) 101 between the drive electrode TX and the receiving electrode RX is changed. That is, when the touch occurs on the touch sensor panel 100, the mutual capacitance (Cm) 101 may become smaller than a base mutual capacitance. This is because, when the conductive object like a finger approaches close to the touch sensor panel 100, the object functions as the ground GND, and then a fringing capacitance of the mutual capacitance (Cm) 101 is absorbed in the object. The base mutual capacitance is the value of the mutual capacitance between the drive electrode TX and the receiving electrode RX when there is no touch on the touch sensor panel 100.

When the object touches the top surface, i.e., the touch surface of the touch sensor panel 100 and a pressure is applied to the top surface, the touch sensor panel 100 may be bent. Here, the value of the mutual capacitance (Cm) 101 between the drive electrode TX and the receiving electrode RX may be more reduced. This is because the bend of the touch sensor panel 100 causes the distance between the touch sensor panel 100 and the reference potential layer to be reduced from " d " to "d'", so that the fringing capacitance of the mutual capacitance (Cm) 101 is absorbed in the reference potential layer as well as in the object. When a nonconductive object touches, the change of the mutual capacitance (Cm) 101 is simply caused by only the change of the distance "d-d'" between the touch sensor panel 100 and the reference potential layer.

As described above, the touch input device 1000 is configured to include the touch sensor panel 100 and the pressure detection module 400 on the display module 200, so that not only the touch position but also the touch pressure can be simultaneously detected.

However, as shown in Fig. 3a, when the pressure detection module 400 as well as the touch sensor panel 100 is disposed on the display module 200, the display properties of the display panel is deteriorated. Particularly, when the air gap is included on the display module 200, the visibility and optical transmittance of the display panel may be lowered.

Accordingly, in order to prevent such problems, the air gap is not disposed between the display module 200 and the touch sensor panel 100 for detecting the touch position. Instead, the touch sensor panel 100 and the display module 200 can be fully laminated by means of an adhesive like an optically clear adhesive (OCA).

Although the following Figs. 3b and 3d do not show the touch sensor panel 100 separately, the touch sensor panel 100 of the touch input device 1000 according to the embodiment may be located outside or inside the display module 200.

Fig. 3b is a cross sectional view showing a second example of the touch input device configured to detect the touch position and the touch pressure in accordance with the embodiment. The cross sectional view of the touch input device 1000 shown in Fig. 3b may be a cross sectional view of a portion of the touch input device 1000. As shown in Fig. 3b, the touch input device 1000 according to the embodiment of the present invention may include the display panel 200A, a backlight unit 200B disposed under the display panel 200A, and a cover layer 500 disposed on the display panel 200A. In the touch input device 1000 according to the embodiment, the pressure sensor 450 and 460 may be formed on a cover 240. In this specification, the display panel 200A and the backlight unit 200B are collectively referred to as the display module 200. Fig. 3b shows that the pressure sensor 450 and 460 is attached on the cover 240. However, according to the embodiment, the pressure sensor 450 and 460 can be also attached to a configuration which is included in the touch input device 1000 and performs the same or similar function as/to that of the cover 240.

The touch input device 1000 according to the embodiment may include an electronic device including a touch screen, for example, a cell phone, a personal data assistant (PDA), a smart phone, a tablet personal computer, an MP3 player, a laptop computer, etc.

At least a portion of the touch sensor is included within the display panel 200A in the touch input device 1000 according to the embodiment. Also, according to the embodiment, the drive electrode and the receiving electrode which are for sensing the touch may be included within the display panel 200A.

The cover layer 500 according to the embodiment may be comprised of a cover glass which protects the front side of the display panel 200A and forms the touch surface. As shown in Fig. 3b, the cover layer 500 may be formed wider than the display panel 200A.

Since the display panel 200A such as the LCD panel according to the embodiment performs a function of only blocking or transmitting the light without emitting light by itself, the backlight unit 200B may be required. For example, the backlight unit 200B is disposed under the display panel 200A, includes a light source and throws the light on the display panel 200A, so that not only brightness and darkness but also information having a variety of colors is displayed on the screen. Since the display panel 200A is a passive device, it is not self-luminous. Therefore, the rear side of the display panel 200A requires a light source having a uniform luminance distribution.

The backlight unit 200B according to the embodiment may include an optical layer 220 for illuminating the display panel 200A. The optical layer 220 will be described in detail with reference to Fig. 3c.

The backlight unit 200B according to the embodiment may include the cover 240. The cover 240 may be made of a metallic material. When a pressure is applied from the outside through the cover layer 500 of the touch input device 1000, the cover layer 500, the display module 200, etc., may be bent. Here, the bending causes a distance between the pressure sensor 450 and 460 and a reference potential layer located within the display module to be changed. The capacitance change caused by the distance change is detected through the pressure sensor 450 and 460, so that the magnitude of the pressure can be detected. Here, a pressure is applied to the cover layer 500 in order to precisely detect the magnitude of the pressure, the position of the pressure sensor 450 and 460 needs to be fixed without changing. Therefore, the cover 240 is able to perform a function of a support capable of fixing a pressure sensor without being bent even by the application of pressure. According to the embodiment, the cover 240 is manufactured separately from the backlight unit 200B, and may be assembled together when the display module is manufactured.

In the touch input device 1000 according to the embodiment, a first air gap 210 may be included between the display panel 200A and the backlight unit 200B. This intends to protect the display panel 200A and/or the backlight unit 200B from an external impact. This first air gap 210 may be included in the backlight unit 200B.

The optical layer 220 and the cover 240, which are included in the backlight unit 200B, may be configured to be spaced apart from each other. A second air gap 230 may be provided between the optical layer 220 and the cover 240. The second air gap 230 may be required in order to ensure that the pressure sensor 450 and 460 disposed on the cover 240 does not contact with the optical layer 220, and in order to prevent that the optical layer 220 contacts with the pressure sensor 450 and 460 and deteriorates the performance of the optical layer 220 even though an external pressure is applied to the cover layer 500 and the optical layer 220, the display panel 200A, and the cover layer 500 are bent.

The touch input device 1000 according to the embodiment may further include a support 251 and 252 such that the display panel 200A, the backlight unit 200B, and the cover layer 500 are coupled to maintain a fixed shape. According to the embodiment, the cover 240 may be integrally formed with the support 251 and 252. According to the embodiment, the support 251 and 252 may form a portion of the backlight unit 200B.

The structure and function of the LCD panel 200A and the backlight unit 200B is a publicly known art and will be briefly described below. The backlight unit 200B may include several optical parts.

Fig. 3c shows the optical layer 220 of the backlight unit 200B in the touch input device according to the embodiment. Fig. 3c shows the optical layer 220 when the LCD panel is used as the display panel 200A.

In Fig. 3c, the optical layer 220 of the backlight unit 200B may include a reflective sheet 221, a light guide plate 222, a diffuser sheet 223, and a prism sheet 224. Here, the backlight unit 200B may include a light source (not shown) which is formed in the form of a linear light source or point light source and is disposed on the rear and/or side of the light guide plate 222.

The light guide plate 222 may generally convert lights from the light source (not shown) in the form of a linear light source or point light source into light from a light source in the form of a surface light source, and allow the light to proceed to the LCD panel 200A.

A part of the light emitted from the light guide plate 222 may be emitted to a side opposite to the LCD panel 200A and be lost. The reflective sheet 221 may be positioned below the light guide plate 222 so as to cause the lost light to be incident again on the light guide plate 222, and may be made of a material having a high reflectance.

The diffuser sheet 223 functions to diffuse the light incident from the light guide plate 222. For example, light scattered by the pattern of the light guide plate 222 comes directly into the eyes of the user, and thus, the pattern of the light guide plate 222 may be shown as it is. Moreover, since such a pattern can be clearly sensed even after the LCD panel 200A is mounted, the diffuser sheet 223 is able to perform a function to offset the pattern of the light guide plate 222. After the light passes through the diffuser sheet 223, the luminance of the light is rapidly reduced. Therefore, the prism sheet 224 may be included in order to improve the luminance of the light by focusing the light again. The prism sheet 224 may include, for example, a horizontal prism sheet and a vertical prism sheet.

The backlight unit 200B according to the embodiment may include a configuration different from the above-described configuration in accordance with the technical change and development and/or the embodiment. The backlight unit 200B may further include an additional configuration as well as the foregoing configuration. Also, in order to protect the optical configuration of the backlight unit 200B from external impacts and contamination, etc., due to the introduction of the alien substance, the backlight unit 200B according to the embodiment may further include, for example, a protection sheet on the prism sheet 224. The backlight unit 200B may also further include a lamp cover in accordance with the embodiment so as to minimize the optical loss of the light source. The backlight unit 200B may also further include a frame which maintains a shape enabling the light guide plate 222, the diffuser sheet 223, the prism sheet 224, a lamp (not shown), and the like, which are main components of the backlight unit 200B, to be exactly combined together in accordance with an allowed dimension. Also, the each of the configurations may be comprised of at least two separate parts.

According to the embodiment, an additional air gap may be positioned between the light guide plate 222 and the reflective sheet 221. As a result, the lost light from the light guide plate 222 to the reflective sheet 221 can be incident again on the light guide plate 222 by the reflective sheet 221. Here, between the light guide plate 222 and the reflective sheet 221, for the purpose of maintaining the additional air gap, the double adhesive tape (DAT) may be included on the edges of the light guide plate 222 and the reflective sheet 221.

As described above, the backlight unit 200B and the display module including the backlight unit 200B may be configured to include in itself the air gap such as the first air gap 210 and/or the second air gap 230. Also, the air gap may be included between a plurality of the layers included in the optical layer 220. Although the foregoing has described that the LCD panel 200A is used, the air gap may be included within the structure of another display panel.

Fig. 3d is a cross sectional view showing a third example of the touch input device configured to detect the touch position and the touch pressure in accordance with the embodiment. Fig. 3d shows a cross section of the touch input device 1000 that further includes a substrate 300 as well as the display module 200. In the touch input device 1000 according to the embodiment, the substrate 300, together with a second outermost cover 320 of the touch input device 1000, functions as, for example, a housing which surrounds a mounting space 310, etc., where the circuit board and/or battery for operation of the touch input device 1000 are located. Here, the circuit board for operation of the touch input device 1000 may be a main board. A central processing unit (CPU), an application processor (AP) or the like may be mounted on the circuit board. Due to the substrate 300, the display module 200 is separated from the circuit board and/or battery for operation of the touch input device 1000. Due to the substrate 300, electrical noise generated from the display module 200 can be blocked. According to the embodiment, the substrate 300 may be referred to as a mid-frame in the touch input device 1000.

In the touch input device 1000, the cover layer 500 may be formed wider than the display module 200, the substrate 300, and the mounting space 310. As a result, the second cover 320 is formed in such a manner as to surround the display module 200, the substrate 300, and the mounting space 310 where the circuit board is located.

The touch input device 1000 according to the embodiment may detect the touch position through the touch sensor panel 100 and include the pressure detection module 400 between the display module 200 and the substrate 300.

Here, the pressure sensor included in the pressure detection module 400 may be formed on the substrate 300, may be formed on the display module 200, or may be formed on the display module 200 and the substrate 300. Also, the electrode 450 and 460 constituting the pressure sensor included in the pressure detection module 400 may be included in the touch input device 1000 in the form of an electrode sheet 440 including the corresponding electrode. This will be described below in detail.

As shown in Figs. 3b and 3d, since the pressure detection module 400 in the touch input device 1000 is disposed between the display module 200 and the substrate 300 and under the display module 200, the electrode constituting the pressure sensor included in the pressure detection module 400 can be made of not only a transparent material but also an opaque material. Hereafter, in the touch input device 1000 according to the embodiment of the present invention, the principle and structure for detecting the magnitude of touch pressure by using the pressure sensor 450 and 460 will be described in detail.

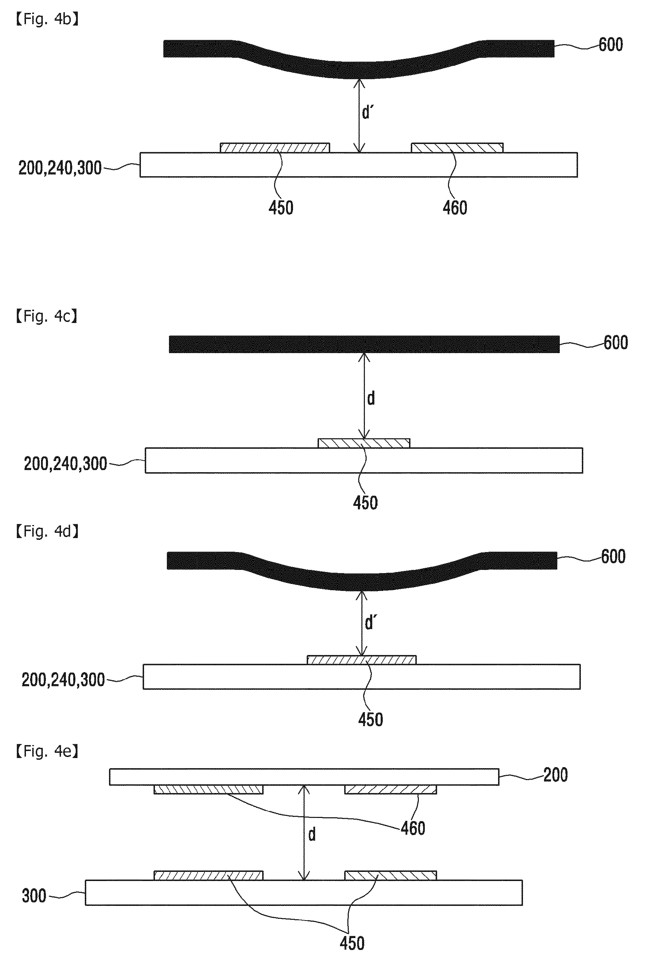

Figs. 4a and 4b show a relative distance between a reference potential layer and a pressure sensor of a first example which are included in the touch input device, and show a pressure is applied to the touch input device.

In the touch input device 1000 according to the embodiment of the present invention, the pressure sensor 450 and 460 may be attached on the cover 240 capable of constituting the backlight unit 200B. In the touch input device 1000, the pressure sensor 450 and 460 and the reference potential layer 600 may be spaced apart from each other by a distance "d".

In Fig. 4a, the reference potential layer 600 and the pressure sensor 450 and 460 may be spaced apart from each other with a spacer layer (not shown) placed therebetween. Here, as described with reference to Figs. 3b and 3c, the spacer layer may be the first air gap 210, the second air gap 230, and/or an additional air gap which are included in the manufacture of the display module 200 and/or the backlight unit 200B. When the display module 200 and/or the backlight unit 200B includes one air gap, the one air gap is able to perform the function of the spacer layer. When the display module 200 and/or the backlight unit 200B includes a plurality of air gaps, the plurality of air gaps are able to collectively perform the function of the spacer layer.

In the touch input device 1000 according to the embodiment, the spacer layer may be located between the reference potential layer 600 and the pressure sensor 450 and 460. As a result, when a pressure is applied to the cover layer 500, the reference potential layer 600 is bent, so that a relative distance between the reference potential layer 600 and the pressure sensor 450 and 460 may be reduced.

In the touch input device 1000 according to the embodiment, the display module 200 may be bent or pressed by the touch applying the pressure. The display module may be bent or pressed in such a manner as to show the biggest transformation at the touch position. When the display module is bent or pressed according to the embodiment, a position showing the biggest transformation may not match the touch position. However, the display module may be shown to be bent or pressed at least at the touch position. For example, when the touch position approaches close to the border, edge, etc., of the display module, the most bent or pressed position of the display module may not match the touch position, however, the display module may be shown to be bent or pressed at least at the touch position.

When the cover layer 500, the display panel 200A, and/or the back light unit 200B are bent or pressed at the time of touching the touch input device 1000 according to the embodiment, the cover 240 positioned below the spacer layer, as shown in Fig. 4b, may be less bent or pressed due to the spacer layer. While Fig. 4b shows that the cover 240 is not bent or pressed at all, this is just an example. The lowest portion of the cover 240 to which the pressure sensor 450 and 460 has been attached may be bent or pressed. However, the degree to which the lowest portion of the cover 240 is bent or pressed can be reduced by the spacer layer.

According to the embodiment, the spacer layer may be implemented in the form of the air gap. The spacer layer may be made of an impact absorbing material in accordance with the embodiment. The spacer layer may be filled with a dielectric material in accordance with the embodiment.

Fig. 4b shows that a pressure is applied to the structure of Fig. 4a. For example, when the external pressure is applied to the cover layer 500 shown in Fig. 3b, it can be seen that a relative distance between the reference potential layer 600 and the pressure sensor 450 and 460 is reduced from "d" to "d'". Accordingly, in the touch input device 1000 according to the embodiment, when the external pressure is applied, the reference potential layer 600 is configured to be more bent than the cover 240 to which the pressure sensor 450 and 460 has been attached, so that it is possible to detect the magnitude of touch pressure.

Figs. 3b, 4a, and 4b show that a first electrode 450 and a second electrode 460 are included as the pressure sensor 450 and 460 for detecting the pressure. Here, the mutual capacitance may be generated between the first electrode 450 and the second electrode 460. Here, any one of the first and the second electrodes 450 and 460 may be a drive electrode and the other may be a receiving electrode. A driving signal is applied to the drive electrode, and a sensing signal may be obtained through the receiving electrode. When voltage is applied, the mutual capacitance may be generated between the first electrode 450 and the second electrode 460.

The reference potential layer 600 have any potential which causes the change of the mutual capacitance generated between the first electrode 450 and the second electrode 460. For instance, the reference potential layer 600 may be a ground layer having a ground potential. The reference potential layer 600 may be any ground layer which is included in the display module.

According to the embodiment, the reference potential layer 600 may be a ground potential layer which is included in itself during the manufacture of the touch input device 1000. For example, in the display panel 200 shown in Figs. 2a to 2c, an electrode (not shown) for blocking noise may be included between the first polarizer layer 271 and the first glass layer 261. This electrode for blocking the noise may be composed of ITO and may function as the ground. Also, according to the embodiment, a plurality of the common electrodes included in the display panel 200 constitutes the reference potential layer 600. Here, the potential of the common electrode may be a reference potential.

When a pressure is applied to the cover layer 500 by means of an object, at least a portion of the display panel 200A and/or the backlight unit 200B is bent, so that a relative distance between the reference potential layer 600 and the first and second electrodes 450 and 460 may be reduced from "d" to "d'". Here, the less the distance between the reference potential layer 600 and the first and second electrodes 450 and 460 is, the less the value of the mutual capacitance between the first electrode 450 and the second electrode 460 may be. This is because the distance between the reference potential layer 600 and the first and second electrodes 450 and 460 is reduced from "d" to " d'", so that a fringing capacitance of the mutual capacitance is absorbed in the reference potential layer 600 as well as in the object. When a nonconductive object touches, the change of the mutual capacitance is simply caused by only the change of the distance " d-d'" between the reference potential layer 600 and the electrodes 450 and 460.

The foregoing has described that the first electrode 450 and the second electrode 460 are included as the pressure sensor 450 and 460, and the pressure is detected by the change of the mutual capacitance between the first electrode 450 and the second electrode 460. The pressure sensor 450 and 460 may be configured to include only any one of the first electrode 450 and the second electrode 460 (for example, the first electrode 450).

Figs. 4c and 4d show a relative distance between a reference potential layer and a pressure sensor of a second example which are included in the touch input device, and show that a pressure is applied to the touch input device. Here, it is possible to detect the magnitude of touch pressure by detecting the self-capacitance between the first electrode 450 and the reference potential layer 600. Here, the change of the self-capacitance between the first electrode 450 and the reference potential layer 600 is detected by applying the driving signal to the first electrode 450 and by receiving the reception signal from the first electrode 450, so that the magnitude of the touch pressure is detected.

For example, the magnitude of the touch pressure can be detected by the change of the capacitance between the first electrode 450 and the reference potential layer 600, which is caused by the distance change between the reference potential layer 600 and the first electrode 450.

Since the distance " d " is reduced with the increase of the touch pressure, the capacitance between the reference potential layer 600 and the first electrode 450 may be increased with the increase of the touch pressure.

According to the embodiment, when the magnitude of the touch pressure is sufficiently large, a state may be created in which the distance between the reference potential layer 600 and the pressure sensors 450 and 460 is not reduced any more at a predetermined position. Hereafter, this state will be referred to as a saturation state. However, even in this case, when the magnitude of the touch pressure becomes larger, an area in the saturation state where the distance between the reference potential layer 600 and the pressure sensors 450 and 460 is not reduced any more may become greater. The greater the area is, the more the mutual capacitance between the first electrode 450 and the second electrode 460 may be reduced. Hereafter, it will be described that the magnitude of the touch pressure is calculated by the change of the capacitance according to the distance change. However, this may include that the magnitude of the touch pressure is calculated by the change of the area in the saturation state. This may be applied to embodiments related to Fig. 4e.

Figs. 3b and 4a to 4d show that the first electrode 450 and/or the second electrode 460 are relatively thick and they are directly attached to the cover 240. However, this is just only for convenience of description. In accordance with the embodiment, the first electrode 450 and/or the second electrode 460 may be, for example, attached to the cover 240 in the form of an integral sheet and may have a relatively small thickness.

Although the foregoing has described that the pressure sensor 450 and 460 is attached to the cover 240 by referencing the touch input device 1000 shown in Fig. 3b, the pressure sensor 450 and 460 may be disposed between the display module 200 and the substrate 300 in the touch input device 1000 shown in Fig. 3c. According to the embodiment, the pressure sensor 450 and 460 may be disposed under the display module 200. In this case, the reference potential layer 600 may be any potential layer which is disposed on the substrate 300 or within the display module 200. Also, according to the embodiment, the pressure sensor 450 and 460 may be attached to the substrate 300. In this case, the reference potential layer 600 may be any potential layer which is disposed on or within the display module 200.

Fig. 4e shows the arrangement of pressure sensors of a third example which is included in the touch input device. As shown in Fig. 4e, the first electrode 450 out of the pressure sensor 450 and 460 may be disposed on the substrate 300, and the second electrode 460 may be disposed under the display module 200. In this case, a separate reference potential layer may not be required. When a pressure touch is performed on the touch input device 1000, a distance between the display module 200 and the substrate 300 may be changed, and thus, the mutual capacitance between the first electrode 450 and the second electrode 460 may be increased. Through the capacitance change, the magnitude of the touch pressure can be detected.

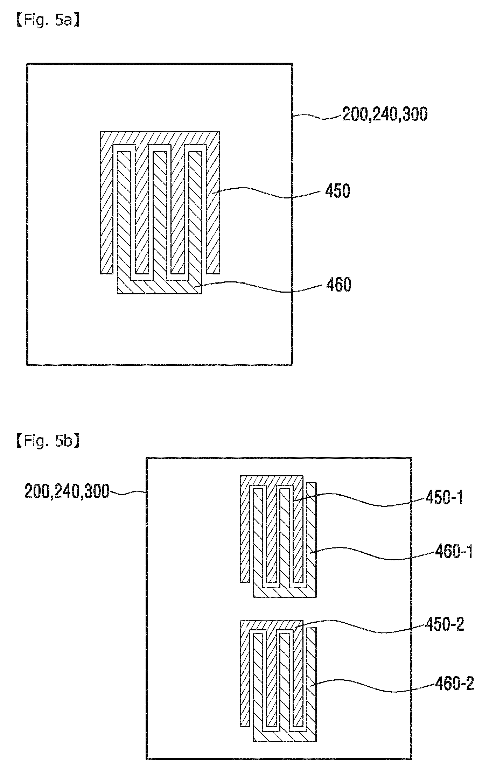

Figs. 5a to 5e show patterns according to first to fifth examples of an electrode constituting the pressure sensor according to the embodiment.

Fig. 5a shows that a pattern according to the first example of a pressure electrode when the touch pressure is detected through the change of the mutual capacitance between the first electrode 450 and the second electrode 460. When the magnitude of the touch pressure is detected as the mutual capacitance between the first electrode 450 and the second electrode 460 is changed, it is necessary to form the patterns of the first electrode 450 and the second electrode 460 so as to generate the range of the capacitance required to improve the detection accuracy. With the increase of a facing area or facing length of the first electrode 450 and the second electrode 460, the size of the capacitance that is generated may become larger. Therefore, the pattern can be designed by adjusting the size of the facing area, facing length and facing shape of the first electrode 450 and the second electrode 460 in accordance with the range of the necessary capacitance. Fig. 5a shows a pressure electrode pattern having a comb teeth shape such that the facing length of the first electrode 450 and the second electrode 460 becomes longer.

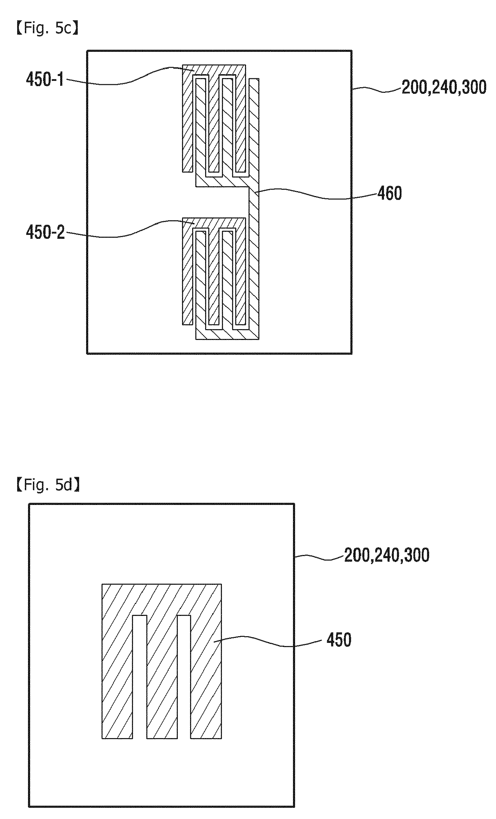

Fig. 5a shows that the first electrode 450 and the second electrode 460 constitutes one channel for detecting the pressure. Fig. 5b shows a pattern when the pressure sensor constitutes two channels. Fig. 5b shows a first electrode 450-1 and a second electrode 460-1 which constitute a first channel, and a first electrode 450-2 and a second electrode 460-2 which constitute a second channel. Fig. 5c shows that the first electrode 450 constitutes two channels 450-1 and 450-2, and the second electrode 460 constitutes one channel. Since the pressure sensor detects the magnitude of the touch pressure at different positions through the first channel and the second channel, even when a multi touch occurs, the magnitude of each touch pressure can be detected. Here, in accordance with the embodiment, the pressure sensor 450 and 460 may be configured to constitute a larger number of channels.

Fig. 5d shows an electrode pattern when the size of the touch pressure is detected according to the change of the self-capacitance between the reference potential layer 600 and the first electrode 450. Although Fig. 5d shows a pattern having a comb teeth shape as the first electrode 450, the first electrode 450 may have a plate shape (for example, a quadrangular plate shape).

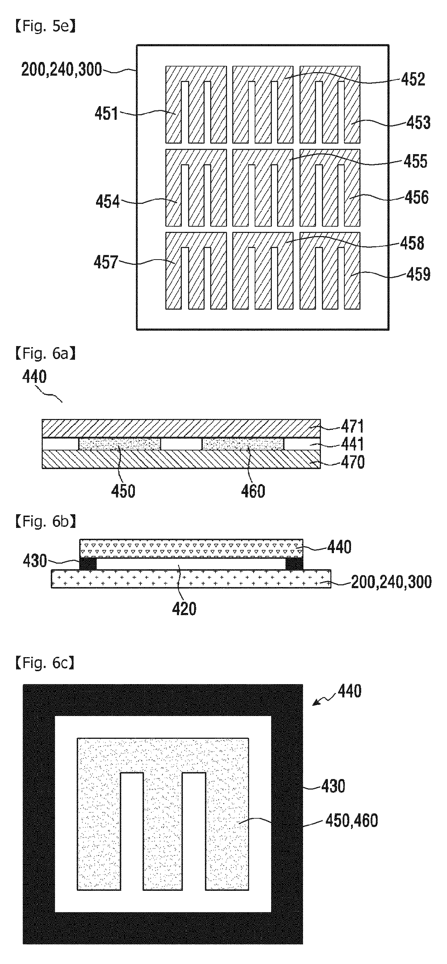

Fig. 5e shows that the first electrode constitutes nine channels 451 to 459. That is, Fig. 5d shows that one channel is constituted, and Fig. 5e shows a pressure sensor when nine channels are constituted. Therefore, in Fig. 5e, even when a multi touch occurs, the size of each touch pressure can be detected. Here, the pressure sensor can be configured to constitute another number of the channels.

Fig. 6a is a cross sectional view of an exemplary electrode sheet which includes a pressure electrode and is to be attached to the touch input device according to the embodiment. For example, the electrode sheet 440 may include an electrode layer 441 between a first insulation layer 470 and a second insulation layer 471. The electrode layer 441 may include the first electrode 450 and/or the second electrode 460. Here, the first insulation layer 470 and the second insulation layer 471may be made of an insulating material like polyimide, Polyethylene Terephthalate (PET), etc. The first electrode 450 and the second electrode 460 included in the electrode layer 441 may include a material like copper, aluminum (Al), silver (Ag), etc. According to the manufacturing process of the electrode sheet 440, the electrode layer 441 and the second insulation layer 471 may be bonded to each other by an adhesive (not shown) like an optically clear adhesive (OCA). Also, according to the embodiment, the pressure electrodes 450 and 460 may be formed by positioning a mask, which has a through-hole corresponding to a pressure electrode pattern, on the first insulation layer 470, and then by spraying a conductive material or by printing the conductive material, or by applying a metallic material and etching.

In order that the touch pressure is detected in the touch input device 1000 according to the embodiment, the integral electrode sheet 440 including at least one pressure electrode 450 and 460 may be attached, as the pressure sensor, to the substrate 300, the display module 200, or the cover 240 in such a manner as to be spaced apart from the substrate 300, the display module 200, or the cover 240, with the spacer layer 420 placed therebetween. The electrode sheet 440 may be attached to the touch input device 1000 not only by a method to be described below with reference to Figs. 6b to 6d but also by various methods which are applied to the structure of Figs. 3a to 3d and are capable of detecting the pressure.

Fig. 6b is a cross sectional view showing a portion of the touch input device to which the electrode sheet has been attached according to a first method. Fig. 6b shows that the electrode sheet 440 has been attached on the substrate 300, the display module 200, or the cover 240.

As shown in Fig. 6c, the adhesive tape 430 having a predetermined thickness may be formed along the border of the electrode sheet 440 so as to maintain the spacer layer 420. Though Fig. 6c shows that the adhesive tape 430 is formed along the entire border (for example, four sides of a quadrangle) of the electrode sheet 440, the adhesive tape 430 may be formed only on at least a portion (for example, three sides of a quadrangle) of the border of the electrode sheet 440. Here, as shown in Fig. 6c, the adhesive tape 430 may not be formed on an area including the pressure electrodes 450 and 460. As a result, when the electrode sheet 440 is attached to the substrate 300 or the display module 200 through the adhesive tape 430, the pressure electrodes 450 and 460 may be spaced apart from the substrate 300 or the display module 200 at a predetermined distance. According to the embodiment, the adhesive tape 430 may be formed on the top surface of the substrate 300, the bottom surface of the display module 200, the surface of the cover 240. Also, the adhesive tape 430 may be a double adhesive tape. Fig. 6c shows only one of the pressure electrodes 450 and 460. According to the embodiment, the pressure sensor may be constituted by including the electrode forming the plurality of channels in one electrode sheet 440.

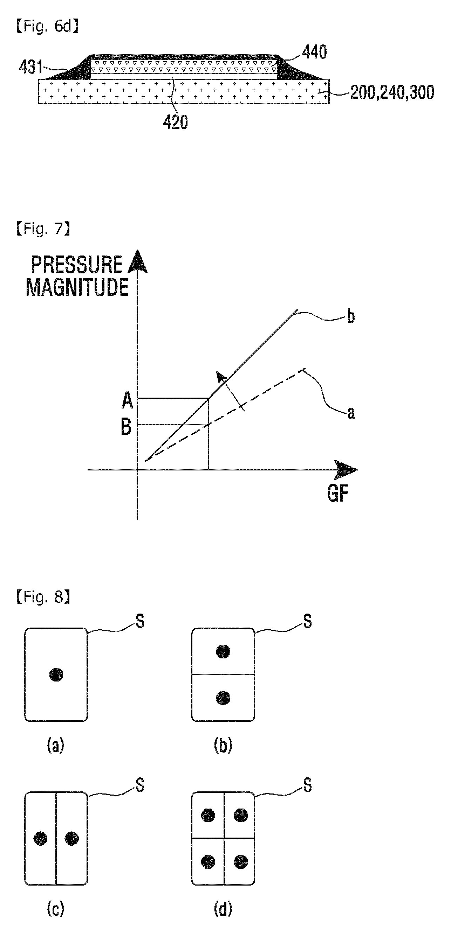

Fig. 6d is a partial cross sectional view of the touch input device to which the electrode sheet has been attached according to a second method. In Fig. 6d, after the electrode sheet 440 is placed on the substrate 300, the display module 200, or the cover 240, the electrode sheet 440 may be fixed to the substrate 300, the display module 200, or the cover 240 by means of the adhesive tape 430. For this, the adhesive tape 430 may come in contact with at least a portion of the electrode sheet 440 and at least a portion of the substrate 300, the display module 200, or the cover 240. Fig. 6d shows that the adhesive tape 430 continues from the top of the electrode sheet 440 to the exposed surface of the substrate 300, the display module 200, or the cover 240. Here, only a portion of the adhesive tape 430, which contacts with the electrode sheet 440, may have adhesive strength. Therefore, in Fig. 6d, the top surface of the adhesive tape 430 may not have the adhesive strength.

As shown in Fig. 6d, even if the electrode sheet 440 is fixed to the substrate 300, the display module 200, or the cover 240 by using the adhesive tape 430, a predetermined space, i.e., air gap may be created between the electrode sheet 440 and the substrate 300, the display module 200, or the cover 240. This is because the substrate 300, the display module 200, or the cover 240 is not directly attached to the electrode sheet 440 by means of the adhesive and because the electrode sheet 440 includes the pressure electrodes 450 and 460 having a pattern, so that the surface of the electrode sheet 440 may not be flat. The air gap of Fig. 6d may also function as the spacer layer 420 for detecting the touch pressure.

The foregoing has described the touch input device to which the pressure sensor and the pressure detection module according to the embodiment of the present invention are applied. Hereinafter, the pressure detection module capable of adjusting a pressure sensitivity in accordance with the embodiment of the present invention will be described in detail.

In the designs of the touch input device 1000 and the pressure detection module 400 for the same, the distance between the reference potential layer 600 and the pressure sensor 450 and 460 and/or a distance between the first electrode 450 and the second electrode 460 are determined. As a result, the magnitude of the pressure can be detected based on changes of the distances through the pressure detection module 400. However, a pressure detection sensitivity of the pressure detection module 400 may be changed by external factors. The pressure may be changed differently from an initial pressure sensitivity in the manufacture of the touch input device 1000. For example, the touch input device 1000 may be transformed by an external force, or the pressure detection module 400 may be replaced through after-services (AS).

Fig. 7 shows a change of pressure sensitivity in the touch input device according to the embodiment. In Fig. 7, a pressing force is represented by "gram force (GF)", and the magnitude of the pressure that is detected in response to the pressing force through the pressure detection module 400 is represented by "pressure magnitude". In Fig. 7, when the pressure detection module 400 is applied to the touch input device 1000 according to the embodiment and the touch surface of the touch input device 1000 is pressed, a relation between the pressing force and the pressure magnitude detected in response to the pressing force is represented by "a".

Then, due to any cause, the pressure magnitude detected in response to the force pressing the touch surface of the touch input device 1000 may be changed. That is, the pressure sensitivity may be changed. In Fig. 7, the relation between the pressing force and the pressure magnitude detected in response to the force pressing the touch surface of the touch input device 1000 in accordance with the changed pressure sensitivity may be represented by "b". For example, due to any cause, the touch input device 1000 may be mechanically transformed such that the distance between the reference potential layer 600 and the pressure sensor 450 and 460 shown in Figs. 4a to 4d is smaller than an initial distance in the design of the touch input device 1000.

Otherwise, the touch input device 1000 may be mechanically transformed such that the distance between the first electrode 450 and the second electrode 460 shown in Fig. 4e is smaller than an initial distance in the design of the touch input device 1000.

In Fig. 7, when the pressure sensitivity is changed as indicated by "b", the pressure magnitude detected in response to the pressing force may be greater than the pressure magnitude of the relation "a". When a touch with a pressure magnitude greater than a predetermined pressure magnitude occurs in the touch input device 1000, the touch may be recognized as a pressure touch. The pressure touch is distinguished from a tap touch which simply occurs on the touch surface of the touch input device 1000. After the touch is recognized as a pressure touch, the touch may be recognized differently according to a level of the pressure magnitude of the touch. Also, the pressure touch itself may be recognized as a meaningful input in the touch input device 1000. When the pressure sensitivity is changed in the touch input device 1000, a user may press the touch surface in accordance with the pressure sensitivity before the change of the pressure sensitivity. Here, when the touch surface is pressed by a force of "A", a pressure magnitude of "B" is detected before the change of the pressure sensitivity. Meanwhile, a pressure magnitude of "C" different from "B" is detected after the change of the pressure sensitivity. That is, the user obtains a response that the user presses by a force greater than the force by which the user himself/herself presses previously. Therefore, the user is not allowed to perform an input that the user wants.

When the relation between the pressing force and the pressure magnitude detected in response to the pressing force is changed from "a" to "b", it is necessary to adjust the pressure sensitivity of the touch input device 1000 so as to maintain an existing pressure sensitivity. While it has been described in the foregoing that the relation is changed such that the pressure sensitivity becomes sensitive, this can be also applied when the relation is changed such that the pressure sensitivity becomes insensitive. For example, the touch input device 1000 may be mechanically transformed such that the distance between the pressure sensor 450 and 460 and the reference potential layer 600 shown in Figs. 4a to 4d is greater an initial distance in the design of the touch input device 1000. Otherwise, the touch input device 1000 may be mechanically transformed such that the distance between the first electrode 450 and the second electrode 460 shown in Fig. 4e is smaller than an initial distance in the design of the touch input device 1000.

As described above, the pressure detection sensitivity through the pressure detection module 400 included in the touch input device 1000 may be changed by external factors. Also, the pressure detection module 400 may be replaced or transformed. In this case, it is required to newly set or adjust the detection sensitivity of the touch pressure magnitude of the pressure detection module 400 included in the touch input device 1000.

Also, when the user who uses the touch input device 1000 is required to adjust the pressure detection sensitivity if necessary. For example, due to the change of the user of the touch input device 1000, convenience for the user, and the condition of the user, even when the touch input device 1000 is pressed by the same force, the detected pressure magnitude may be determined differently.

Fig. 8 shows an example where a touch screen is divided such that the pressure sensitivity is separately set in the touch input device according to the embodiment. As shown in (a) of Fig. 8, one pressure sensitivity may be set for a touch screen "S" which may form a touch area in the touch input device 1000 according to the embodiment of the present invention. According to the embodiment, the screen of the touch screen "S" is divided, and the pressure sensitivity may be independently set for each divided screen. As shown in (b) and (c) of Fig. 8, the screen of the touch screen "S" is divided into two screens, and the pressure sensitivity may be independently set for each divided screen. Also, as shown in (d) of Fig. 8, the screen of the touch screen "S" is divided into four screens, and the pressure sensitivity may be independently set for each divided screen. Here, a method for dividing the screen may be determined differently according to the embodiment. According to the embodiment, the touch area, i.e., the touch surface, may not be composed of the touch screen "S".

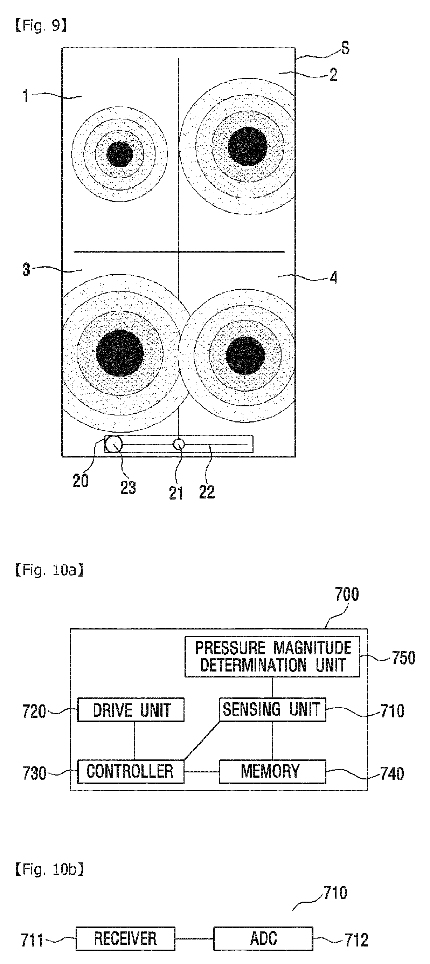

Fig. 9 shows that different pressure sensitivities are set for each divided area of the touch screen in the touch input device according to the embodiment. Fig. 9 shows that the touch screen "S" as the touch area is divided into four screens, and the pressure sensitivity may be independently set for each divided screen. For example, during the setting of the pressure sensitivity, it may be selected that the touch screen is divided into four areas (1, 2, 3, and 4) and set. Then, an area to which the pressure sensitivity is intended to be first set is selected among the four areas, and then the pressure sensitivity for the selected area may be set.

In a process of adjusting the pressure sensitivity in a predetermined area (e.g., a first area), the pressure sensitivity can be adjusted such that a desired sensitivity is obtained by applying a weight or force through a direct touch of the corresponding area. For instance, if the first area is directly pressed by a first weight or a first force with being maintained for a predetermined period of time, the corresponding weight or force may be set to the magnitude of a first pressure. Here, the magnitude of the first pressure may be a reference value for the touch to be recognized as a pressure touch in the touch input device 1000. When a pressure touch with a magnitude greater than the reference value is inputted, the touch input device 1000 is able to recognize that the pressure touch has occurred. According to the embodiment, the magnitude of the first pressure may be any pressure magnitude that can be a predetermined standard for setting the pressure sensitivity in the touch input device 1000.

According to the embodiment, the process of adjusting the pressure sensitivity in a predetermined area (e.g., the first area) is as follows. In a pressure level setting block 20 shown in the lower part of Fig. 9, a moving circle 21 may move on a bar 22 in accordance with a weight or force pressing a pressure touch area 23. The user may press the pressure touch area 23 until the weight or force reaches his/her desired weight or force. Also, when the weight or force reaches his/her desired weight or force, the user maintains the pressing of the pressure touch area 23 for a predetermined period of time, and then releases. Accordingly, a pressure magnitude corresponding to the corresponding weight or force may be set as the magnitude of the first pressure.

Also, according to the embodiment, the process of adjusting the pressure sensitivity in a predetermined area (e.g., the first area) may be performed such that the user is allowed to simply select high or low pressure sensitivity. For instance, the high or low pressure sensitivity in the touch input device 1000 may be represented by a digital bar, numbers, colors, luminosity, saturation, etc. Through this, the user is able to select and set his/her desired pressure sensitivity.

Information on the pressure sensitivity setting for each area, which has been described in the foregoing, may be stored in a memory. The pressure sensitivity in the touch input device 1000 may be set by default before the user sets the pressure sensitivity separately. The setting of the pressure sensitivity in the touch input device 1000 may be changed and/or replaced. Such a pressure sensitivity setting may be performed by another method in accordance with the embodiment.

Fig. 10a shows a pressure detector according to the embodiment. In this specification, the pressure detection module 400 may be designated to include the pressure sensor 450 and 460 and a pressure detector 700.

The pressure detector 700 according to the embodiment may include a sensing unit 710, a drive unit 720, a controller 730, and a memory 740. The drive unit 720 and the sensing unit 710 included in the pressure detector 700 may operate in the same manner as or a similar manner to that of the drive unit 120 and the sensing unit 110 of the touch sensor panel 100, which has been described with reference to Fig. 1. A drive signal may be applied to the each of the electrodes 450 to 458 through the drive unit 720. The sensing unit 710 may receive a signal including information on the capacitance from the each of the electrodes 450 to 458.

Fig. 10a shows a configuration of the sensing unit 710 according to the embodiment. The sensing unit 710 of the pressure detector 700 according to the embodiment of the present invention may have the same or similar configuration as/to that of the sensing unit 110 described with reference to Fig. 1. The sensing unit 710 according to the embodiment may include a receiver 711 and an analog-digital converter (ADC) 712. The receiver 711 may transfer a signal including the change amount of the capacitance generated at the pressure sensor 450 and 460 to the ADC 712. Here, the change amount of the capacitance may correspond to a change amount of the capacitance generated at the pressure sensor 450 and 460 or a change amount of the capacitance generated between the pressure sensor 450 and 460 and the reference potential layer 600 by applying a pressure to the touch surface of the touch input device 1000. The signal may be an analog voltage signal.

The ADC 712 included in the sensing unit 710 converts the analog signal including information on the capacitance into a digital signal. A pressure magnitude determination unit 750 which may be included in the pressure detector 700 according to the embodiment is able to determine the magnitude of the pressure on the basis of a value of the digital signal. For example, it can be assumed that, before the change of the pressure sensitivity, the value of the digital signal outputted from the ADC 712 is changed from 0 to 100. Here, the magnitude of the first pressure may correspond to the value of 10 of the digital signal. A processor (not shown) may process such that an input operation corresponding to the pressure magnitude is performed in the touch input device 1000 in accordance with the result of the pressure magnitude determination unit 750. According to the embodiment, the pressure magnitude determination unit 750 may be included in the processor (not shown). According to the embodiment, the pressure magnitude determination unit 750 may be included in the central processing unit (CPU) or application processor (AP) of the touch input device 1000. When an input for setting the pressure sensitivity occurs, the controller 730 may store the corresponding setting in the memory 740 and transfer a control signal to the sensing unit 710.

For example, the pressure sensitivity may be set such that the value of the output digital signal of the ADC 712, which corresponds to the magnitude of the first pressure, is 5. This is an example in which the pressure sensitivity is changed more sensitively. In this case, in order that the pressure magnitude determination unit 750 determines the pressure magnitude in accordance with the changed pressure sensitivity, the controller 730 controls the output of the ADC 712 to be multiplied by a predetermined factor and to be transferred to the pressure magnitude determination unit 750. In the above example, the factor may be set to 2 such that the pressure magnitude determination unit 750 determines the pressure magnitude on the basis of existing determination criterion without being modified or changed. Therefore, the result value obtained by multiplying the value of the digital signal outputted from the ADC 712 by the factor of 2 may be inputted to the pressure magnitude determination unit 750. Accordingly, the touch surface of the touch input device 1000 is pressed by a force less than that before the change of the pressure sensitivity, and the consequent change amount of the distance "d" and the capacitance change amount are reduced. As a result, the value of the digital signal outputted from the ADC 712 becomes smaller (for example, 5). However, the corresponding value of the digital signal (for example, 5) is multiplied by the factor of 2 and is inputted to the pressure magnitude determination unit 750, and thus, the magnitude of the corresponding pressure may be detected as the magnitude of the first pressure. That is, with regard to the value 10 of the digital signal outputted from the ADC 712 before the change of the pressure sensitivity and the value 5 of the digital signal outputted from the ADC 712 after the change of the pressure sensitivity, the pressure magnitude determination unit 750 may determine that all of the pressure magnitudes are the same. The same factor (e.g., 2) may be multiplied to the value of the output digital signal of the ADC 712 with respect to the same pressure sensitivity setting, and then may be inputted to the pressure magnitude determination unit 750.

Also, a smaller pressure magnitude may be detected in response to the same force, for example, the distance between the reference potential layer 600 and the pressure sensor 450 and 460 becomes greater through mechanical modification, etc. In this case, it is necessary to change the pressure sensitivity in such a manner that the pressure sensitivity through user's experiences can be maintained. For example, the value of the output digital signal of the ADC 712 may be changed from 0 to 50 through mechanical modification, etc. Here, the factor may be set to 2 by changing the pressure sensitivity as above such that the same pressure magnitude can be detected with respect to the same pressing force of the user before and after the change of the pressure sensitivity.

Similarly, the pressure sensitivity may be set such that the value of the output digital signal of the ADC 712, which corresponds to the magnitude of the first pressure, is 20. This is an example in which the pressure sensitivity is insensitively changed. In this case, in order that the pressure magnitude determination unit 750 determines the pressure magnitude in accordance with the changed pressure sensitivity, the controller 730 controls the output of the ADC 712 to be multiplied by a predetermined factor and to be transferred to the pressure magnitude determination unit 750. In the above example, the factor may be set to 1/2 such that the pressure magnitude determination unit 750 determines the pressure magnitude on the basis of existing determination criterion without being modified or changed. Therefore, the result value obtained by multiplying the value of the digital signal outputted from the ADC 712 by the factor of 1/2 may be inputted to the pressure magnitude determination unit 750. Accordingly, the touch surface of the touch input device 1000 is pressed by a force greater than that before the change of the pressure sensitivity, and the consequent change amount of the distance "d" and the capacitance change amount are increased. As a result, the value of the digital signal outputted from the ADC 712 becomes larger (for example, 20). However, the corresponding value of the digital signal (for example, 20) is multiplied by the factor of 1/2 and is inputted to the pressure magnitude determination unit 750, and thus, the magnitude of the corresponding pressure may be detected as the magnitude of the first pressure. That is, with regard to the value 10 of the digital signal outputted from the ADC 712 before the change of the pressure sensitivity and the value 20 of the digital signal outputted from the ADC 712 after the change of the pressure sensitivity, the pressure magnitude determination unit 750 may determine that all of the pressure magnitudes are the same. The same factor (e.g., 1/2) may be multiplied to the value of the output digital signal of the ADC 712 with respect to the same pressure sensitivity setting, and then may be inputted to the pressure magnitude determination unit 750.

Also, a greater pressure magnitude may be detected in response to the same force, for example, the distance between the reference potential layer 600 and the pressure sensor 450 and 460 becomes smaller through mechanical modification, etc. In this case, it is necessary to change the pressure sensitivity in such a manner that the pressure sensitivity through user's experiences can be maintained. For example, the value of the output digital signal of the ADC 712 may be changed from 0 to 200 through mechanical modification, etc. Here, the factor may be set to 1/2 by changing the pressure sensitivity as above such that the same pressure magnitude can be detected with respect to the same pressing force of the user before and after the change of the pressure sensitivity.

If a pressure sensitivity is set, the controller 730 may calculate the value of the factor and store in the memory 740. If a default pressure sensitivity is set, the corresponding factor may be set to 1 and stored in the memory 740. The controller 730 according to the embodiment of the present invention may store pressure sensitivity setting items in the memory 740. According to the embodiment, the controller 730 may calculate the above-described factor value according to the pressure sensitivity setting and store in the memory 740. The controller 730 may control such that the result value obtained by multiplying the value of the output digital signal of the ADC 712 by the factor is inputted to the pressure magnitude determination unit 750. Also, the controller 730 may control such that the pressure magnitude determination unit 750 determines the pressure magnitude on the basis of the result value obtained by multiplying the value of the output digital signal of the ADC 712 by the factor. According to the embodiment, the controller 730 and/or the sensing unit 710 may operate with reference to the memory 740. According to the embodiment, the controller 730 may be a central processing unit (CPU) or application processor (AP) of the touch input device 1000.

The foregoing has described that the pressure sensitivity is set for one pressure magnitude that is a standard, and thus, the factor is determined, and the factor is used to determine the pressure magnitude. However, according to the embodiment, the pressure sensitivity may be set separately for a plurality of the pressure magnitudes.

As shown in Figs. 8b to 8d and 9, when the pressure sensitivity is set differently for each of a plurality of the divided screens of one touch screen, the factor value may be set to be changed by interpolation in order to prevent the pressure sensitivity from rapidly changing at each boundary area of the divided screens.

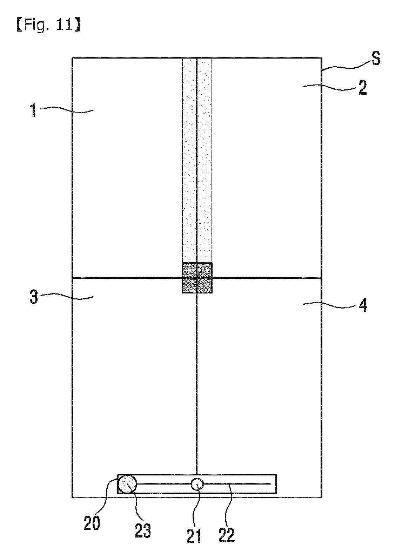

For example, when the factor of the first area 1 is set to 1 and the factor of the second area 2 is set to 2 in Fig. 11, the factor may be set to be changed from the factor of 1 to the factor of 2 with respect to a border line between the first area 1 and the second area 2 in an area S12 having a predetermined width. Therefore, the factor may be set to 1.5 at the border line between the first area 1 and the second area 2. As such, the value of the factor may be linearly changed in the boundary area S12 between the two divided screens in which the different pressure sensitivities have been set.

As shown in Fig. 11, the factor may be changed in a boundary area S1234 among three or more divided screens by interpolation. It is described as an example that the factor of the third area 3 is set to 3 and the factor of the fourth area 4 is set to 4. The factor of any position within the boundary area S1234 may be calculated based on the factors (1, 2, 3, and 4 respectively) of four reference points, i.e., the apexes of the boundary area S1234 and based on spaced distances between the position and the four reference points. As such, when the touch screen is composed of the plurality of divided screens in which the different pressure sensitivities have been set, it is possible to remove awkwardness in use caused by the rapid change of the pressure sensitivity in the boundary area of each divided screen.

Some components of the pressure detector 700 according to the embodiment of the present invention can be separated from other components within the pressure detector 700. At least some components of the pressure detector 700 according to the embodiment of the present invention is implemented by a programming language, and thus, can be composed of a module that can be operated in a computer.

Although embodiments of the present invention were described above, these are just examples and do not limit the present invention. Further, the present invention may be changed and modified in various ways, without departing from the essential features of the present invention, by those skilled in the art. For example, the components described in detail in the embodiments of the present invention may be modified. Further, differences due to the modification and application should be construed as being included in the scope and spirit of the present invention, which is described in the accompanying claims.

## Claims

1. A touch input device comprising:
a pressure sensor; and
a pressure detector,
wherein the pressure detector comprises:
a drive unit which applies a drive signal to the pressure sensor;
a sensing unit which receives a signal from the pressure sensor and detects a change amount of a capacitance generated at the pressure sensor; and
a controller which is configured to change and set the capacitance change amount corresponding to a predetermined pressure magnitude.

2. The touch input device of claim 1, wherein the changing and setting are independently performed for each of a plurality of divided screens of a touch screen of the touch input device.

3. The touch input device of claim 1, wherein the pressure detector further comprises a pressure magnitude determination unit which determines the pressure magnitude on the basis of a result value obtained by multiplying an output signal of the sensing unit by a factor determined based on the changing and setting.

4. The touch input device of claim 3, wherein the sensing unit comprises a receiver and an analog-digital converter (ADC), and wherein the output signal of the sensing unit is an output signal of the ADC.

5. The touch input device of claim 1, wherein the changing and setting are performed by an input to the touch input device.

6. The touch input device of any one of claims 1 to 5, further comprising a display module comprising:
a display panel; and
a backlight unit which is disposed under the display panel and comprises an optical layer and a cover,
wherein the pressure sensor is attached on the cover.

7. The touch input device of claim 6, wherein the signal received from the pressure sensor comprises information on a self-capacitance between the pressure sensor and a reference potential layer located within the display module, and wherein the pressure sensor comprises at least one single electrode.

8. The touch input device of claim 6,
wherein the pressure sensor comprises at least one pair of a first electrode and a second electrode,
and wherein the signal received from the pressure sensor comprises information on a mutual capacitance between the first electrode and the second electrode.

9. The touch input device of any one of claims 1 to 5, further comprising:
a display module and a substrate spaced from the display module,
wherein the pressure sensor is attached to at least one of the display module and the substrate.

10. The touch input device of claim 9,
wherein the signal received from the pressure sensor comprises information on a self-capacitance between the pressure sensor and a reference potential layer,
wherein the reference potential layer is any one of the display module and the substrate,
and wherein the pressure sensor comprises at least one single electrode.

11. The touch input device of claim 9,
wherein the pressure sensor comprises at least one pair of a first electrode and a second electrode,
and wherein the signal received from the pressure sensor comprises information on a mutual capacitance between the first electrode and the second electrode.

12. The touch input device of any one of claims 1 to 5, wherein the pressure sensor comprises a plurality of electrodes forming a plurality of channels and is composed of an integral sheet.
